# EUROPÄISCHE PATENTSCHRIFT

(11) **EP 4 117 951 B1**
(45) Veröffentlichungstag und Bekanntmachung des Hinweises auf die Patenterteilung: **03.01.2024**
(21) Anmeldenummer: 21706232.2
(22) Anmeldetag: 16.02.2021
(51) Int. Cl.: B60K 37/06, B60W 60/00, G05D 1/02

(54) **VERFAHREN ZUR ANPASSUNG EINER DURCH EIN ASSISTENZSYSTEM AUTOMATISIERT DURCHGEFÜHRTEN FUNKTIONALITÄT EINES FAHRZEUGES UND FAHRERASSISTENZSYSTEM**
METHOD FOR ADJUSTING A FUNCTIONALITY OF A VEHICLE CARRIED OUT AUTOMATICALLY BY AN ASSISTANCE SYSTEM, AND DRIVER-ASSISTANCE SYSTEM
PROCÉDÉ DE RÉGLAGE D'UNE FONCTIONNALITÉ D'UN VÉHICULE EXÉCUTÉE AUTOMATIQUEMENT PAR UN SYSTÈME D'AIDE ET SYSTÈME D'AIDE À LA CONDUITE

(30) Priorität: 09.03.2020 DE 102020001539
(43) Veröffentlichungstag der Anmeldung: 18.01.2023
(73) Patentinhaber: Mercedes-Benz Group AG, 70372 Stuttgart (DE)
(72) Erfinder: PETERS, Steven, 71701 Schwieberdingen (DE); THEOFANOU-FUELBIER, Dimitra, 73734 Esslingen (DE); EISELE, Jens, 70193 Stuttgart (DE); HOIS, Joana, 71034 Böblingen (DE); STUDER, Stefan, 70565 Stuttgart (DE)
(74) Vertreter: Novagraaf Group
(86) Internationale Anmeldenummer: PCT/EP2021/053724
(87) Internationale Veröffentlichungsnummer: WO 2021/180433

(56) Entgegenhaltungen:
- DE-A1-102018 001 375
- DE-A1-102019 202 195

## Beschreibung

Die Erfindung betrifft ein Verfahren zur Anpassung einer durch ein Assistenzsystem automatisiert durchgeführten Funktionalität eines Fahrzeuges sowie ein Fahrerassistenzsystem zur Durchführung des Verfahrens.

Die DE 10 2004 023 544 A1 offenbart ein Verfahren, bei welchem ein Fahrer in einem Trainings- und Konfigurationsmodus eine Funktionalität aktivieren kann. Ein Assistenzsystem erfasst bei aktiven Trainings- und Konfigurationsmodus die Fahrweise des Fahrers. Hat der Fahrer eine Verkehrssituation nach seinen Idealvorstellungen bewältigt und möchte er eine Einstellung der Funktionalität entsprechend seinem gezeigten Fahrverhalten im Fahrzeug, bestätigt er die Übernahme der Einstellung durch Betätigung einer entsprechenden Taste oder durch Vorgabe eines entsprechenden Befehls.

Die DE 10 2019 202195 A1 offenbart ein Verfahren zur Anpassung einer durch ein Assistenzsystem automatisiert durchgeführten Funktionalität eines Fahrzeugs.

Da Assistenzsysteme in Fahrzeugen immer besser aber auch immer komplexer werden, können in einzelnen Fahrsituationen vom Fahrzeug automatisiert durchgeführte Funktionalitäten eingestellt werden, die beim Fahrer zu einem Missverständnis führen können. Aufgabe der Erfindung ist es, ein Verfahren zur Anpassung einer durch ein Assistenzsystem automatisiert durchgeführten Funktionalität eines Fahrzeuges und ein Fahrerassistenzsystem anzugeben, bei welchem in vorgegebenen Fahrsituationen die Missverständnisse zwischen Fahrer und Fahrzeug unterbunden werden.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Die Aufgabe ist mit einem Verfahren zur Anpassung einer durch ein Assistenzsystem automatisiert durchgeführten Funktionalität eines Fahrzeuges dadurch gelöst, dass für den Fall eines Abbruchs der automatisiert durchgeführten Funktionalität durch den Fahrer dieser Abbruch erfasst und abgespeichert wird, wobei bei einer einen vorgegebenen Schwellwert überschreitenden Abbruchhäufigkeit die abgebrochene Funktionalität durch eine geänderte oder neue Funktionalität ersetzt wird. Unter dem Begriff Funktionalität ist beispielsweise eine Informationsausgabe wie eine Erklärung an einen Nutzer, eine Aktivierung eine Funktion des oder eines weiteren Assistenzsystems oder eines Infotainmentsystems zu verstehen. Die durch das Assistenzsystem eingestellte Funktionalitäten werden somit an die Wünsche oder üblichen Verhaltensweisen des Fahrers angepasst und entsprechend adaptiert. Dadurch können in der Zukunft Missverständnisse zwischen Fahrzeug und Fahrer weitgehend unterbunden und das Vertrauen in Assistenzsystem erhöht werden.

In einer Ausgestaltung erfolgt der Abbruch der automatisch durch das Fahrzeug eingestellten aktuellen Funktionalität des Fahrzeuges durch eine manuelle Einstellung der gewünschten Funktionalität durch den Fahrer. Dadurch wird die neue oder geänderte Funktion unmittelbar durch den Fahrer vorgegeben.

In einer weiteren Ausgestaltung wird die geänderte oder neue Funktionalität nach Bestätigung durch den Fahrer ausgeführt. Die Bestätigung durch den Fahrer stellt sicher, dass auch wirklich die vom Fahrer gewünschte Funktionalität aktiviert wird. Eine Adaption der geänderten oder neuen Funktionalität erfolgt erst nach der Bestätigung durch den Fahrer.

In einer weiteren Ausgestaltung wird bei Abbruch einer Funktionalität oder Überschreitung des vorgegebenen Schwellwertes eine Information an den Fahrer ausgegeben, nach welchen Kriterien sich die abgebrochene Funktionalität bestimmt. Der Fahrer wird somit darüber informiert, warum die Funktionalität abgebrochen wurde, was zum besseren Verständnis der abgebrochenen Fahrzeugfunktionalität führt.

In einer weiteren Ausgestaltung werden beim Abbruch der automatisiert durch das Fahrzeug durchgeführten aktuellen Funktionalität jeweils deren aktuelle, auf den Fahrkontext bezogene Sensorsignale abgespeichert und bei der Auswertung der Häufigkeit des Abbruches, auch bei Auslösung der neuen Funktionalität, berücksichtigt. Die Sensorsignale stellen dabei Parameter dar, welche die abgebrochene Funktionalität charakterisieren, wodurch ein Vergleich mit zuvor abgebrochenen Funktionalitäten bei der Bestimmung der Häufigkeit des Abbruchs derselben Funktionalität vereinfacht wird und genauer ausführbar ist.

In einer weiteren Ausgestaltung werden als auszuwertende aktuelle, auf den Fahrkontext bezogene Sensorsignale der automatisiert durch das Fahrzeug durchgeführten aktuellen Funktionalität des Fahrzeuges ein Ort und/oder eine Uhrzeit und/oder ein fahrzeugabhängiges Ereignis und/oder ein umgebungsabhängiges Ereignis verwendet. Zu den fahrzeugabhängigen Ereignissen zählen Gas geben oder Bremsen oder ein Spurwechsel oder ein Einstellen des Tempomats oder anderer Assistenzsysteme. Als umgebungsabhängige Ereignisse können beispielsweise Nässe, Glatteis oder Schnee herangezogen werden.

In einer weiteren Ausgestaltung werden der Ersatz der automatisiert durch das Fahrzeug eingestellten aktuellen Funktionalität durch die gewünschte Funktionalität sowie die die automatisiert durch das Fahrzeug eingestellte, die aktuelle Funktionalität charakterisierenden Sensorsignale in einem Fahrerprofil des Fahrzeuges abgespeichert. Bei einem Fahrerwechsel werden die automatisiert einzustellenden Funktionalitäten dann automatisch bei Aufruf des entsprechenden Fahrerprofils eingestellt, wodurch das Fahrzeug an das Fahrverhalten des jeweiligen Fahrers angepasst wird.

Eine Weiterbildung der Erfindung betrifft ein Verfahren zur Anpassung einer durch ein Assistenzsystem automatisiert durchgeführten Funktionalität eines Fahrzeuges. Für den Fall eines Abbruchs der automatisiert durchgeführten Funktionalität, welcher durch eine Auswertung von Emotionen des Fahrers ausgelöst wird, wird dieser Abbruch erfasst und abgespeichert, wobei bei einer einen vorgegebenen Schwellwert überschreitenden Abbruchhäufigkeit die abgebrochene Funktionalität durch eine geänderte oder neue Funktionalität ersetzt wird. Die Auswertung der Emotionen des Fahrers, beispielsweise seiner Mimik wie ein Kopfschütteln oder Sprachäußerung, erlaubt ein schnelles Erkennen eines Missverständnisses zwischen Fahrzeug und Fahrer, welches entsprechend schnell korrigiert werden kann. Darüber hinaus können Emotionen auch durch Überwachung von Puls, Blutdruck, Gesichtsmimik ermittelt werden. Anhand emotionsbestimmender Messgrößen wird ein für die Emotion bestimmender repräsentativer Wert gebildet. Sobald der repräsentative Wert eine vorgegebene Grenze passiert wird ein Abbruch einer automatisiert durchgeführten Funktionalität ausgelöst. Alternativ kann der Abbruch erst erfolgen, sobald eine vorgegebene Anzahl einer Überschreitung der Grenze erfolgt ist. Beispielsweise wird bei einer Routenwahl des Navigationssystems mehrmals ein Absinken der Emotion, d.h. Wohlbefindens ermittelt, worauf an den Fahrer eine Anfrage zur Auswahl eines Abbruchs der Routenführung und/oder zukünftigen Ersatz durch eine alternative Route ausgegeben wird.

Eine weitere Weiterbildung der Erfindung betrifft ein Fahrerassistenzsystem zur Anpassung einer durch das Assistenzsystem automatisiert durchgeführten Funktionalität eines Fahrzeuges an ein Fahrverhalten eines Fahrers. Das Fahrerassistenzsystem umfasst eine Auswerteeinheit zur Erfassung der durch den Fahrer abgebrochenen aktuellen, automatisiert durchgeführten Funktionalität des Fahrzeuges, die einen Speicher zur Abspeicherung der abgebrochenen Funktionalität aufweist und mit einem Zähler zur Bestimmung einer Häufigkeit des durch den Fahrer erzeugten Abbruchs der aktuellen, automatisiert eingestellten Funktionalität verbunden ist, wobei eine Vergleichseinheit bei Überschreitung eines Schwellwertes durch die von Zähler ermittelte Häufigkeit der Abbrüche eine Auslöseeinheit zur Aktivierung einer geänderten oder neuen Funktionalität ansteuert.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale können für sich oder in beliebiger, sinnvoller Kombination den Gegenstand der Erfindung bilden, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen.

Es zeigen:
- Fig. 1: ein Ausführungsbeispiel des erfindungsgemäßen Fahrerassistenzsystems,
- Fig. 2: ein Ausführungsbespiel des erfindungsgemäßen Verfahrens.

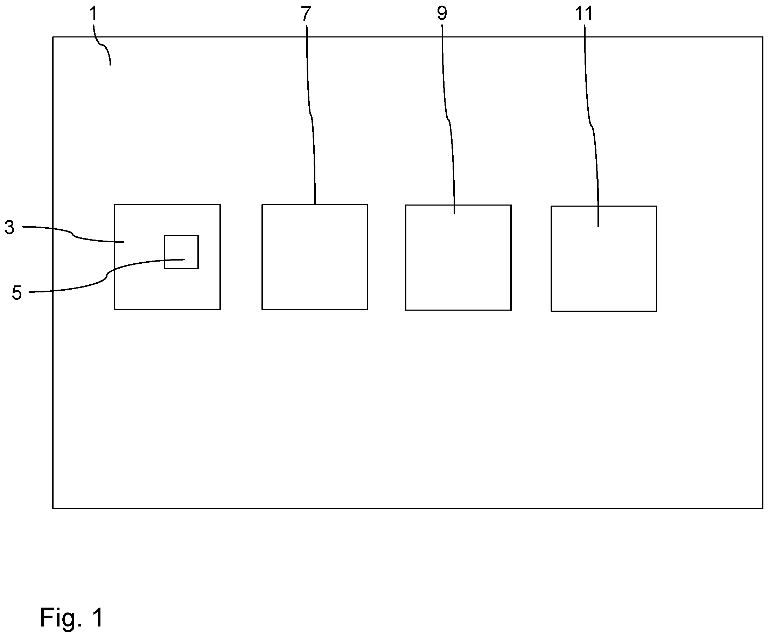

In Fig. 1 ist ein Ausführungsbeispiel eines erfindungsgemäßen Fahrerassistenzsystems dargestellt, wie es in Fahrzeugen zum Einsatz kommt. Das Fahrerassistenzsystem 1 umfasst eine Auswerteeinheit 3, in welcher ein als Ringspeicher ausgebildeter Speicher 5 angeordnet ist. Die Auswerteeinheit 3 ist mit einem Zähler 7 verbunden. Der Zähler 7 ist wiederum mit einer Vergleichseinheit 9 gekoppelt, die ein Signal an eine Auslöseeinheit 11 ausgibt.

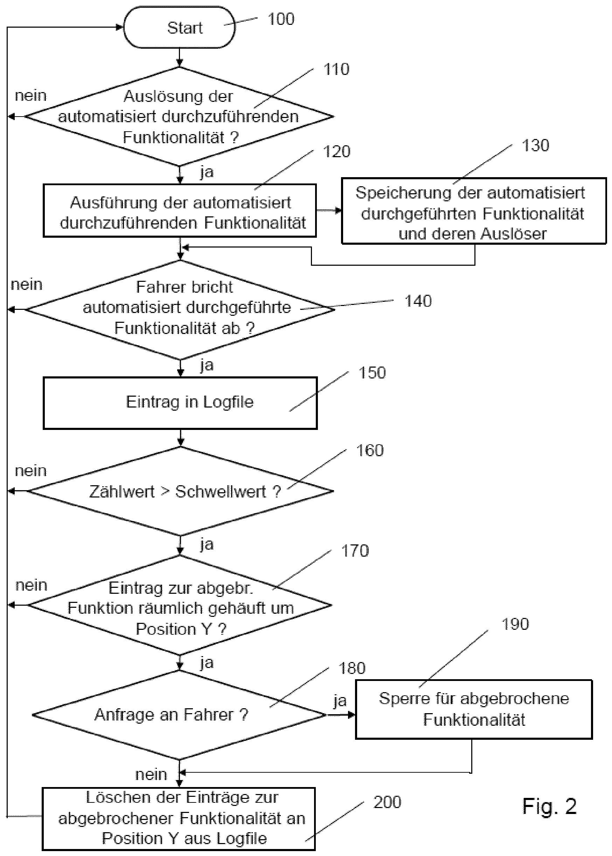

Mit Hilfe von Fig. 2 soll das Prinzip des erfindungsgemäßen Verfahrens erläutert werden, wie es durch das Fahrerassistenzsystem 1 ausgeführt wird. Nach dem Start des Verfahrens (Block 100) wird im Block 110 geprüft, ob ein Auslöser das Fahrerassistenzsystem 1 zum Ausführen einer automatisiert durchzuführenden Funktionalität des Fahrzeuges angestoßen hat. Ist dies der Fall, führt das Fahrerassistenzsystem die automatisiert im Fahrzeug eingestellte Funktionalität aus (Block 120). Im Block 130 werden die aktuelle, automatisiert durchgeführte Funktionalität zusammen mit den aktuellen, auf den Fahrkontext bezogenen Sensorsignalen der automatisiert durchgeführten Funktionalität im Speicher 5 abgespeichert. Bei der Verwendung des Ringspeichers werden permanent für die letzten Sekunden die letzte automatisiert durchgeführte Funktionalität sowie deren Auslöser gespeichert. Ausgehend vom Block 120 oder 130 wird festgestellt, ob die automatisiert durchgeführte Funktionalität durch den Fahrer abgebrochen wurde (Block 140). Ist dies nicht erfolgt, wird zum Start (Block 100) zurückgegangen. Wurde die automatisiert durchgeführte Funktionalität durch den Fahrer abgebrochen, wird im Block 150 ein Logfile erstellt, in welchem festgehalten wird, dass die automatisiert durchgeführte Funktionalität abgebrochen wurde. Dazu wird die Funktionalität, die das Fahrzeug automatisiert durchgeführt hat oder deren Durchführung durch das Fahrzeug beabsichtigt war, mit einer GPS-Position des Fahrzeuges bei Abbruch der Funktionalität protokolliert. Dazu werden die im Speicher 5 abgespeicherte aktuelle, automatisiert durchgeführte Funktionalität zusammen mit den aktuellen auf den Fahrkontext bezogenen Sensorsignalen der automatisiert durchgeführten Funktionalität sowie deren Auslöser hinzugefügt. Anschließend wird im Block 160 geprüft, ob die durch den Zähler 7 festgestellte Anzahl der Einträge der abgebrochenen Funktionalität im Logfile einen vorgegebenen Schwellwert überschreitet. Ist dies nicht der Fall, wird zum Block 100 zurückgegangen und das Verfahren neu gestartet. Wird festgestellt, dass die Anzahl der Einträge im Zähler 7 den vorgegebenen Schwellwert überschritten hat, wird im Block 170 überprüft, ob die ausgewerteten Einträge zur abgebrochenen Funktionalität räumlich gehäuft um eine bestimmte Position Y auftreten. Dies wird in der Vergleichseinheit 9 durch den Vergleich der im Logfile abgelegten GPS -Daten untersucht. Kann eine Häufung der ausgewerteten Einträge an einer bestimmten Position nicht festgestellt werden, wird zu Block 100 zurückgekehrt. Bei einer festgestellten Häufung wird der Fahrer angefragt, ob die abgebrochene Funktionalität zukünftig an der Position Y nicht mehr ausgeführt werden soll (Block 180). Stimmt der Fahrer dem zu, wird im Block 190 das Fahrerassistenzsystem 1 angewiesen, die abgebrochene Funktionalität an der Position Y nicht mehr durchzuführen. Vom Block 180 wird bei Verneinung der Anfrage durch den Fahrer bzw. vom Block 190 nach Hinterlegung der Nichtdurchführung der geprüften Funktionalität zum Block 200 übergegangen, wo alle Einträge zur untersuchten Funktionalität an der Position Y aus dem Logfile gelöscht werden. Danach beginnt das Verfahren im Block 100 von Neuem.

Zum besseren Verständnis sollen nun verschiedenen Anwendungen des beschriebenen Verfahrens dargestellt werden. In einem ersten Fall hat der Fahrer eine vorgegebene Fahrtroute (aktuell automatisiert durchgeführte Funktionalität) in seinem Navigationssystem eingestellt, was im Speicher 5 gemeinsam mit der Maßnahme zum Auslösen abgespeichert wird. Der Fahrer entschließt sich aber, der vom Navigationssystem vorgegebenen Route nicht zu folgen, sondern diese Funktionalität abzubrechen, indem er eine andere Fahrtoute einschlägt also z.B. an der nächsten Autobahnabfahrt entgegen der Navigationsplanung nicht abfährt, ohne das Navigationssystem auszuschalten oder ein neues Ziel einzugeben. Er aktiviert nun den Tempomat für eine vorgegebene Geschwindigkeit des Fahrzeuges. Das Navigationssystem sieht vor, auf der ursprünglichen Route zu fahren, weshalb das Fahrzeug vor der Abfahrmöglichkeit abbremst. In diesem Fall wird dem Fahrer eine Erklärung angezeigt, wieso das Fahrzeug abgebremst wird, damit er das Fahrzeugverhalten versteht. Bei Abbruch der vorgegebenen Fahrtroute wird diese gemeinsam mit der GPS-Position des Fahrzeuges, an welchem der Abbruch erfolgte im Logfile und den anderen bereits im Speicher 5 abgelegten Daten hinterlegt. Der Abbruch der Fahrtroute und die Position des Abbruchs werden durch den Zähler 7 gezählt. Anschließend wird durch die Vergleichseinheit 9 überprüft, ob an derselben Position die automatisiert eingestellte Fahrroute schon öfters abgebrochen wurde. Ist dies der Fall wird die im Zähler 7 registrierte Anzahl der Abbrüche an derselben Position mit einem vorgegebenen Schwellwert verglichen. Wird dieser überschritten, wird der Fahrer gefragt, ob die automatisiert durchgeführte Fahrtroute an dieser Position nicht mehr ausgeführt werden soll. Stimmt der Fahrer zu, wird diese Fahrtroute an der bestimmten Position nicht mehr ausgeführt und durch die vom Fahrer eingeschlagene Fahrtroute ersetzt.

In einem weiteren Beispiel soll ein Abstandsassistenzsystem, welches den Abstand des Fahrzeuges zu einem vorausfahrenden Fahrzeug regelt, betrachtet werden. Das assistiert fahrende Fahrzeug (aktuell automatisiert durchgeführte Funktionalität) beabsichtigt, zur Einstellung des vorgegebenen Abstandes zu bremsen. Der Fahrer bremst aber schon früher als das Abstandsassistenzsystem und bricht somit den automatisiert durchgeführten Regelvorgang ab, was im Speicher 5 gemeinsam mit der Auslösung des automatisiert ausgelösten Abstandsregelvorganges abgespeichert wird. Im Logfile werden nun die GPS-Position und der Zeitpunkt des Abbremsens durch den Fahrer gemeinsam mit den im Speicher 3 abgelegten Daten protokolliert. Der Zähler 7 zählt dieses Abbremsen durch den Fahrer vor dem Abbremsen durch das Fahrzeug. An den Fahrer wird durch das Fahrzeug eine Erklärung ausgegeben, warum das Fahrzeug bei einem erreichten Abstand zum vorausfahrenden Fahrzeug abbremsen wollte, um Missverständnisse zwischen Fahrer und Fahrzeug auszuräumen. Da der Fahrer aber früher bei einem größeren Abstand zum vorausfahrenden Fahrzeug bremsen möchte, wird untersucht, ob eine vergleichbare Situation an derselben GPS-Position schon einmal aufgetreten ist. In der Vergleichseinheit 9 werden die Einträge des Zählers 7 mit einem vorgegebenen Schwellwert verglichen. Wird dieser überschritten, wird die Abstandsassistenzsystem durch die Auslöseeinheit 11 angewiesen, das Abbremsen des Fahrzeuges bei dem berechneten Abstand zu vorausfahrenden Fahrzeug zukünftig durch den Abstand zu ersetzen, bei welchem der Fahrer abgebremst hat.

In einem weiteren Beispiel wird ein Spurhaltesystem zur Einhaltung einer Trajektorie des Fahrzeuges betrachtet. Das Spurhaltesystem überwacht eine von dem Fahrzeug befahrene Bahnkurve. Die vorgegebene Bahnkurve führt zum Überfahren einer Straßenmarkierung, weshalb das Fahrzeug automatisiert einen Brems- und/oder Lenkeingriff (aktuell automatisiert durchgeführte Funktionalität) ausführt, um auf die vorgegebene Trajektorie zurück zu kehren. Der Fahrer ist dadurch irritiert und überstimmt die automatisierte Aktion durch einen aktiven Lenkeingriff. An dieser Stelle wird von dem Spurhaltesystem eine Information ausgegeben, warum dieser automatisierte Brems- und/oder Lenkeingriff erfolgt ist. Gleichzeitig wird der Fahrer abgefragt, ob dieser automatische Lenk- bzw. Bremseingriff zukünftig an der entsprechenden Position oder generell deaktiviert werden soll. Ist der Fahrer damit einverstanden, wird das Spurhaltesystem entsprechend instruiert.

In vielen Fällen kann ein Missfallen des Fahrers mit einer automatisch durchgeführten Funktionalität des Fahrzeuges schon zeitnah festgestellt werden, wenn z.B. eine Mimik des Fahrers durch eine Gesichtserkennung ausgewertet wird. Dabei kann schon, bevor der Fahrer eine Aktion einleitet, das Missverständnis zwischen Fahrer und Fahrzeug erkannt und das beschriebene Verfahren gestartet werden.

Obwohl die Erfindung im Detail durch bevorzugte Ausführungsbeispiele näher illustriert und erläutert wurde, so ist die Erfindung nicht durch die offenbarten Beispiele eingeschränkt.

## Patentansprüche

1. Verfahren zur Anpassung einer durch ein Assistenzsystem automatisiert durchgeführten Funktionalität eines Fahrzeuges,
**dadurch gekennzeichnet, dass**
für den Fall eines Abbruchs der automatisiert durchgeführten Funktionalität durch den Fahrer dieser Abbruch erfasst und abgespeichert wird, wobei bei einer einen vorgegebenen Schwellwert überschreitenden Abbruchhäufigkeit die abgebrochene Funktionalität durch eine geänderte oder neue Funktionalität ersetzt wird.

2. Verfahren nach Anspruch 1,
**dadurch gekennzeichnet, dass**
der Abbruch der automatisch durch das Fahrzeug eingestellten aktuellen Funktionalität des Fahrzeuges durch eine manuelle Einstellung der gewünschten Funktionalität durch den Fahrer erfolgt.

3. Verfahren nach Anspruch 1 oder 2
**dadurch gekennzeichnet, dass**
die geänderte oder neue Funktionalität nach Bestätigung durch den Fahrer ausgeführt wird.

4. Vorrichtung nach mindestens einem der vorhergehenden Ansprüche,
**dadurch gekennzeichnet, dass**
bei Abbruch einer Funktionalität oder Überschreitung des vorgegebenen Schwellwertes eine Information an den Fahrer ausgegeben wird, nach welchen Kriterien sich die abgebrochene Funktionalität bestimmt.

5. Verfahren nach mindestens einem der vorhergehenden Ansprüche,
**dadurch gekennzeichnet, dass**
beim Abbruch der automatisiert durch das Fahrzeug durchgeführten aktuellen Funktionalität jeweils deren aktuelle auf den Fahrkontext bezogene Sensorsignale abgespeichert und bei der Auswertung der Häufigkeit des Abbruches, auch bei Auslösung der neuen Funktionalität, berücksichtigt werden.

6. Verfahren nach Anspruch 5,
**dadurch gekennzeichnet, dass**
als auszuwertende aktuelle auf den Fahrkontext bezogene Sensorsignale der automatisch durch das Fahrzeug eingestellten aktuellen Funktionalität des Fahrzeuges ein Ort und/oder eine Uhrzeit und/oder ein fahrzeugabhängiges Ereignis und/oder ein umgebungsabhängiges Ereignis verwendet werden.

7. Verfahren nach mindestens einem der vorhergehenden Ansprüche,
**dadurch gekennzeichnet, dass**
der Ersatz der automatisiert durch das Fahrzeug durchgeführten aktuellen Funktionalität durch die gewünschte Funktionalität sowie die Parameter der automatisch durch das Fahrzeug eingestellten aktuellen Funktionalität in einem Fahrerprofil des Fahrzeuges abgespeichert werden.

8. Verfahren zur Anpassung einer durch ein Assistenzsystem automatisiert durchgeführten Funktionalität eines Fahrzeuges an ein Fahrverhalten eines Fahrers,
**dadurch gekennzeichnet, dass**
für den Fall eines Abbruchs der automatisiert durchgeführten Funktionalität, welcher durch eine Auswertung von Emotionen des Fahrers ausgelöst wird, dieser Abbruch erfasst und abgespeichert wird, wobei bei einer einen vorgegebenen Schwellwert überschreitenden Abbruchhäufigkeit die abgebrochene Funktionalität durch eine geänderte oder neue Funktionalität ersetzt wird.

9. Fahrerassistenzsystem zur Anpassung einer durch das Assistenzsystem automatisiert durchgeführten Funktionalität eines Fahrzeuges an ein Fahrverhalten eines Fahrers,
**dadurch gekennzeichnet, dass**
eine Auswerteeinheit (3) zur Erfassung der durch den Fahrer abgebrochenen aktuellen, automatisiert durchgeführten Funktionalität des Fahrzeuges einen Speicher (5) zur Abspeicherung der abgebrochenen Funktionalität umfasst und mit einem Zähler (7) zur Bestimmung einer Häufigkeit des durch den Fahrer erzeugten Abbruchs der aktuellen, automatisiert eingestellten Funktionalität verbunden ist, wobei eine Vergleichseinheit (9) bei Überschreitung eines Schwellwertes durch die von Zähler (7) ermittelte Häufigkeit der Abbrüche eine Auslöseeinheit (11) zur Aktivierung einer geänderten oder neuen Funktionalität ansteuert.

## Claims

1. Method for adapting a functionality of a vehicle carried out automatically by an assistance system,
**characterized in that**
in the event that the automatically carried out functionality is terminated by the driver, this termination is detected and stored, in the case of a termination frequency exceeding a predetermined threshold value, the terminated functionality being replaced by a changed or new functionality.

2. Method according to claim 1,
**characterized in that**
the current functionality of the vehicle automatically set by the vehicle is terminated by the desired functionality being manually set by the driver.

3. Method according to either claim 1 or claim 2,
**characterized in that**
the changed or new functionality is executed after confirmation by the driver.

4. Method according to at least one of the preceding claims,
**characterized in that**
if a functionality is terminated or the predetermined threshold value is exceeded, information is output to the driver about the criteria used to determine the terminated functionality.

5. Method according to at least one of the preceding claims,
**characterized in that**
if the current functionality carried out automatically by the vehicle is terminated, its current sensor signals relating to the driving context are stored in each case and taken into account during the evaluation of the frequency of the termination, including when the new functionality is triggered.

6. Method according to claim 5,
**characterized in that**
a location and/or a time and/or a vehicle-dependent event and/or an environment-dependent event are used as current sensor signals to be evaluated of the current functionality of the vehicle automatically set by the vehicle, which sensor signals relate to the driving context.

7. Method according to at least one of the preceding claims,
**characterized in that**
the replacement of the current functionality carried out automatically by the vehicle by the desired functionality and the parameters of the current functionality automatically set by the vehicle are stored in a driver profile of the vehicle.

8. Method for adapting a functionality of a vehicle carried out automatically by an assistance system to a driving behavior of a driver,
**characterized in that**
in the event that the automatically carried out functionality is terminated, which is triggered by an evaluation of emotions of the driver, this termination is detected and stored, the terminated functionality being replaced by a changed or new functionality if a termination frequency exceeds a predetermined threshold value.

9. Driver assistance system for adapting a functionality of a vehicle automatically carried out by the assistance system to a driving behavior of a driver,
**characterized in that**
an evaluation unit (3) for detecting the current, automatically carried out functionality of the vehicle terminated by the driver comprises a memory (5) for storing the terminated functionality, and is connected to a counter (7) for determining a frequency of the termination, generated by the driver, of the current, automatically set functionality, a comparison unit (9) controlling a triggering unit (11) for activating a changed or new functionality if the frequency of the terminations determined by the counter (7) exceeds a threshold value.

## Revendications

1. Procédé pour l'adaptation d'une fonctionnalité d'un véhicule exécutée de manière automatisée par un système d'aide,
**caractérisé en ce que**
dans le cas d'une interruption de la fonctionnalité exécutée de manière automatisée par le conducteur, cette interruption est saisie et enregistrée, en cas d'une fréquence d'interruption dépassant une valeur de seuil prédéfinie la fonctionnalité interrompue étant remplacée par une fonctionnalité neuve ou modifiée.

2. Procédé selon la revendication 1,
**caractérisé en ce que**
l'interruption de la fonctionnalité actuelle du véhicule réglée automatiquement par le véhicule a lieu par un réglage manuel de la fonctionnalité souhaitée par le conducteur.

3. Procédé selon la revendication 1 ou 2,
**caractérisé en ce que**
la fonctionnalité neuve ou modifiée est exécutée après confirmation par le conducteur.

4. Procédé selon au moins l'une des revendications précédentes,
**caractérisé en ce que**
en cas d'interruption d'une fonctionnalité ou de dépassement de la valeur de seuil prédéfinie, une information est transmise au conducteur sur les critères selon lesquels la fonctionnalité interrompue est déterminée.

5. Procédé selon au moins l'une des revendications précédentes,
**caractérisé en ce que**
lors de l'interruption de la fonctionnalité actuelle exécutée de manière automatisée par le véhicule, ses signaux de capteur actuels relatifs au contexte de conduite sont respectivement enregistrés et pris en compte lors de l'évaluation de la fréquence de l'interruption, ainsi que lors du déclenchement de la nouvelle fonctionnalité.

6. Procédé selon la revendication 5,
**caractérisé en ce que**
un lieu et/ou une heure et/ou un événement dépendant du véhicule et/ou un événement indépendant de l'environnement est/sont utilisé(e)(s) en tant que signaux de capteur actuels relatifs au contexte de conduite à évaluer de la fonctionnalité actuelle du véhicule, réglée automatiquement par le véhicule.

7. Procédé selon au moins l'une des revendications précédentes,
**caractérisé en ce que**
le remplacement de la fonctionnalité actuelle exécutée de manière automatisée par le véhicule par la fonctionnalité souhaitée ainsi que les paramètres de la fonctionnalité actuelle réglée automatiquement par le véhicule sont enregistrés dans un profil de conducteur du véhicule.

8. Procédé pour l'adaptation d'une fonctionnalité d'un véhicule exécutée de manière automatisée par un système d'aide à un comportement de conduite d'un conducteur,
**caractérisé en ce que**
dans le cas d'une interruption de la fonctionnalité exécutée de manière automatisée, laquelle est déclenchée par une évaluation d'émotions du conducteur, cette interruption est saisie et enregistrée, en cas d'une fréquence d'interruption dépassant une valeur de seuil prédéfinie, la fonctionnalité interrompue étant remplacée par une fonctionnalité neuve ou modifiée.

9. Système d'aide à la conduite pour l'adaptation d'une fonctionnalité d'un véhicule exécutée de manière automatisée par le système d'aide à un comportement de conduite d'un conducteur,
**caractérisé en ce que**
une unité d'évaluation (3) pour la saisie de la fonctionnalité actuelle du véhicule, exécutée de manière automatisée, interrompue par le conducteur comprend une mémoire (5) pour l'enregistrement de la fonctionnalité interrompue et est connectée à un compteur (7) pour la détermination d'une fréquence de l'interruption générée par le conducteur de la fonctionnalité actuelle, réglée de manière automatisée, une unité de comparaison (9) commandant, dans le cas d'un dépassement d'une valeur de seuil par la fréquence des interruptions déterminée par le compteur (7), une unité de déclenchement (11) pour l'activation d'une fonctionnalité neuve ou modifiée.
